# EUROPEAN PATENT APPLICATION

(11) **EP 2 500 080 A2**
(43) Date of publication of application: **19.09.2012**
(21) Application number: 11186112.6
(22) Date of filing: 21.10.2011
(51) Int. Cl.: B01D 46/36, B01D 46/00

(54) **Protective filter for vacuum pump**

(30) Priority: 18.03.2011 JP 2011060999
(71) Applicant: Teoss CO., LTD., Tokyo 185-0012 (JP)
(72) Inventor: Murai, Tsuyoshi, Tokyo, 185-0012 (JP); Konaka, Toshinori, Tokyo, 185-0012 (JP)
(74) Representative: Waldren, Robin Michael

(57) **Abstract**

A protective filter (A) for vacuum pump comprises: a casing (1) being supplied exhaust gas (H) including microparticles and accommodating microparticle collection liquid (4) inside; a rotating drum (2) having a rotating cylinder (16) and a basket (19), being filled a filler (5) for collecting the microparticles, rotating inside the casing (1) immersing a part of the filler (5) to the microparticle collection liquid (4), the exhaust gas (H) supplied into the casing (1) flows into the rotating cylinder (16) contacting the microparticle collection liquid (4) at a surface of the filler (5), the exhaust gas (H) is discharged through an opening (6) provided at one end of the rotating cylinder (16); a roller (40) rotating the basket (19); and a connecting pipe (7) having an opening facing the opening (6) of the rotating cylinder (16), fixed to the casing (1), and connected to the vacuum pump (C).

## Description

### Background of the Invention

### Field of the Invention

The present invention relates to a protective filter removing microparticles contained in exhaust gas from upstream manufacturing equipment using vacuum or reduced pressure (hereinafter, both of them are called "reduced pressure"). The microparticles mean SiO microparticles, a-Si microparticles (amorphous silicon microparticles), microparticles of reaction products, or the like from semiconductor production equipment, for example single crystal hoist equipment and CVD (Chemical Vapor Deposition) equipment. And the protective filter supplies powder-free exhaust gas to a downstream vacuum pump.

### Description of Related Art

The manufacturing equipment using reduced pressure is operated in reduced pressure atmosphere, flowing inert gas. The manufacturing equipment requires a downstream vacuum pump. The vacuum pump suctions continuously the exhaust gas generated inside the manufacturing equipment in operation. When the exhaust gas includes the microparticles, the microparticles are accumulated gradually inside the vacuum pump, with breakage of the vacuum pump.

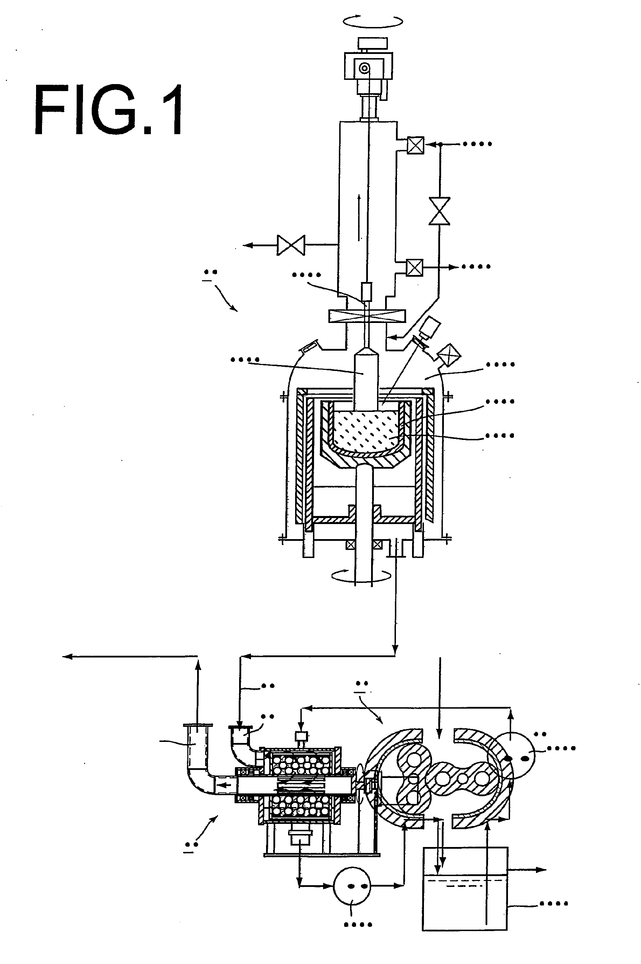

For example, as shown in Fig. 1, the manufacturing equipment makes single crystals by CZ (Czochralski) method. Molten pure Si, as raw material of the single crystals, is accommodated in an SiO₂ crucible under a high-temperature atmosphere. A small amount of SiO microparticles generated by the reaction between the molten pure Si and SiO₂ of the crucible, a-Si microparticles, microparticles of reaction products, or the like is included in the exhaust gas. The SiO is supplied to the vacuum pump with inert gas which is supplied into a furnace.

An oil-sealed rotary pump, a dry-vacuum pump, a mechanical booster pump, or the like can be used as the vacuum pump. Each vacuum pump has a sliding and contacting part between a rotor and a casing, or one rotor and the other rotor. The barely contained SiO powder enters into the sliding and contacting part, and wears the sliding and contacting part and forces the rotor into continuous overload rotation. Finally, the rotor is forced to stop. The stoppage of the rotor negatively affects manufacturing lines until recovery.

Therefore, Japanese Laid-Open Patent Publication No.9 — 175881(Patent Document 1) has been suggested. In the Patent Document 1, a technology for controlling "dust explosion" by moisturizing the exhaust gas which includes SiO and SiO₂ is disclosed. The exhaust gas is moisturized by passing through a water reservoir arranged upstream of the dry vacuum pump (as a vacuum pump). Furthermore, a buffer tank and a vacuum breaking valve are provided upstream of the water reservoir. This avoids the vapour explosion in the single crystal manufacturing equipment caused by countercurrent flow of the water from the water reservoir into the equipment in case of emergency shutdown of the dry vacuum pump in trouble or blackout. According to the Patent Document 1, the issue in case of using the water reservoir can be resolved. And the safeness and assuredness can be improved.

### Summary of the Invention

But the technology disclosed in the Patent Document 1 can not control the breakage of the dry vacuum pump. Because the exhaust gas in a state of bubble including the SiO and SiO₂ can pass through the water reservoir. Even if the dust explosion is controlled by moisturizing the SiO and SiO₂, almost the SiO and SiO₂ can not be removed efficiently. Recently, a single crystal material for semiconductors is required to be a large diameter. And manufacturing equipment including the single crystal manufacturing equipment is also required to be larger. Consequently, the stoppage of the manufacturing lines causes a serious damage to a company. This is not only for the above-mentioned single crystal manufacturing equipment but also for general manufacturing equipment, chemical equipment, and environmental equipment using reduced pressure. The present invention has been made to clear the above issues associated with the conventional arts. It is, therefore, a main object of the present invention to provide a protective filter for vacuum pump which can remove efficiently the microparticles, which causes the trouble of the vacuum pump, within the exhaust gas. And the protective filter for vacuum pump can avoid the damage of the vacuum pump and prolong the life of the vacuum pump.

According to a first aspect of the present invention, a protective filter (A) for vacuum pump comprises:
a casing (1) being supplied exhaust gas (H) including microparticles through an exhaust pipe (3) and accommodating microparticle collection liquid (4) inside;
a rotating drum (2) having a rotating cylinder (16) and a basket (19) provided around the rotating cylinder (16), being filled a filler (5) for collecting the microparticles, rotating inside the casing (1) immersing a part of the filler (5) to the microparticle collection liquid (4), the exhaust gas (H) supplied into the casing (1) flows into the rotating cylinder (16) contacting the microparticle collection liquid (4) at a surface of the filler (5), the exhaust gas (H) is discharged through an opening (6) provided at one end of the rotating cylinder (16);
a roller (40) rotating the basket (19); and
a connecting pipe (7) having an opening facing the opening (6) of the rotating cylinder (16), fixed to the casing (1), and connected to the vacuum pump (C).

The microparticle collection liquid (4) may be high viscous and low vapour pressure liquid. Furthermore, the microparticle collection liquid (4) may be glycerin or high viscous and low vapour pressure oil.

According to the present invention, the microparticles within the exhaust gas (H) under the reduced pressure are removed by adhering to the microparticle collection liquid (4) before the supply of the exhaust gas (H) into the vacuum pump (C). Consequently, the troubles caused by obstruction and wearing of the microparticles can be avoided. When the glycerin is used as the high viscous and low vapour pressure liquid, the liquid can be discharged without any special treatment in case that the collected microparticles have no toxicity.

### Brief Description of the Drawings

Fig.1 is a flow diagram of the present invention.
Fig.2 is a cross section of the first embodiment of the protective filter for the vacuum pump of the present invention.
Fig. 3 is a cross section of the second embodiment of the protective filter for the vacuum pump of the present invention.

### Detailed Description

An embodiment of the present invention is explained with figures below. The embodiment is for manufacturing single crystal silicon for semiconductors from molten silicon liquid. The present invention is not limited to this embodiment. The present invention is applicable for cases that target equipment (B) is using reduced pressure and exhaust gas (H) including microparticles from the target equipment (B).

Fig.1 is a flow diagram showing an example that a vacuum pump (C) is provided with single crystal manufacturing equipment using atmospheric method (B) through a protective filter for vacuum pump (A) of the present invention. The single crystal manufacturing equipment (B) is lifting equipment for GaAs monocrystal or the like used for single crystal silicon and compound semiconductors. This embodiment is explained with manufacturing single crystal silicon ingot as most popular material for semiconductor wafer.

High-purity polycrystal silicon and various dopant for different purposes are put into a crucible (51) for melting made of quartz glass accommodated in a chamber (50), as shown in Fig.1. The silicon and dopant are melted in Argon atmosphere. A single crystal (52) as a seed dipped on a surface of molten silicon is lifted slowly. Then the single crystal having the same preferred orientation that the seed single crystal (52) has is grown into a large column-shaped ingot (53).

In this process, inert argon gas is injected into the chamber (50) during growth of crystal. And the pressure of inside the chamber (50) is reduced. Reaction products generated at a surface of molten liquid (54) is discharged. Then the inside of the chamber (50) is kept clean constantly. The pressure of the inside of the chamber is controlled as 103 to 104 Pa (15 to 20 Torr), flowing Ar gas as carrier gas into the chamber. A small number of SiO microparticles or fume made of mainly microparticles generated from the molten liquid (54) can be discharged from the pressure controlled chamber (50). Consequently, the manufacturing ability to the single crystal ingot (53) can be improved dramatically. In other word, while the silicon is melting inside the quartz crucible, the exhaust gas (H) from the single crystal manufacturing equipment (B) includes a small number of SiO microparticles. SiO microparticles adhere and accumulate on an inner surface of exhaust system. Consequently, if the flaked or released SiO flows inside the vacuum pump (C) in operation, movable parts of the vacuum pump (C) suffer damages.

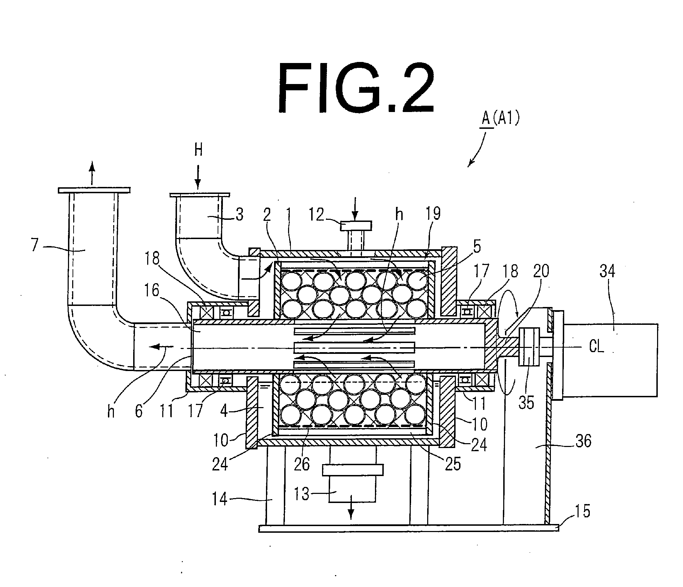

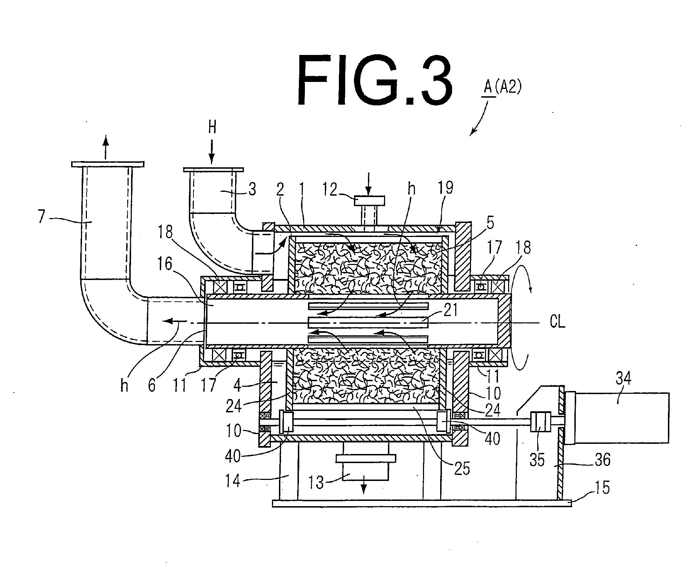

Embodiments of the protective filter for vacuum pump (A) are shown in Fig. 2 and Fig. 3. Fig. 2 shows first embodiment (A1); Fig3. shows second embodiment (A2). The first embodiment is explained as below. The explanation for the first embodiment is applied to the same part of the second embodiment. An exhaust pipe (3) is connected to a casing (1) of the protective filter (A1). The exhaust pipe (3) introduces the exhaust gas (H) including microparticles from the single crystal manufacturing equipment (B). The casing (1) is a cylinder provided laterally. A pair of bearing housings (11) projected outward from each center of both side surfaces (10) is provided. The exhaust pipe (3) is connected to the side surface (10) above one bearing housing (11). A liquid supply pipe (12) is connected to upper surface of the casing (1). A liquid drain pipe (13) is connected to bottom surface. The casing (1) is supported by legs (14) arranged in a standing condition from a base (15).

The rotating drum (2) comprises a rotating cylinder (16) and a basket (19). The rotating cylinder (16) is hung across both bearing housings (11) of the casing (1) and is supported by bearings (17) and packing (18) between both bearing housings (11). The basket (19) is a cylinder provided around the rotating cylinder (16). The rotating cylinder (16) has an opening (6) at its one end. And the other end of the rotating cylinder (16) is obstructed. A rotating axis (20) is protruded outward from the obstructed surface. A plurality of slits (21) or holes is pierced on side surface of the rotating cylinder (16) formed at regular intervals in circumferential direction. The slits (21) or holes communicate inside of the rotating cylinder (16) and inside of the basket (19). The size of the slits (21) is determined so as not to pass through microparticles collecting filler (5) into the rotating cylinder (16). The microparticles collecting filler (5) can be filled into the rotating cylinder (16) by providing a net (not shown) over the opening (6) for avoiding overflow of the filler (5).

The basket (19) comprises a pair of circular side boards (24), a plurality of pillar members (25), and a cylindrical net (26). The side boards (24) are provided on the side surface of the rotating cylinder (16) in certain interval. The pillar members (25) are provided at periphery edge of the side boards (24) in certain interval. And the net (26) is provided inside the pillar members (25). Inside of the cylindrical net (26) is filled with the microparticles collecting filler (5).

The microparticles collecting filler (5) is for example midair metal balls, plastic balls, commercial raschig rings, metal meshes, plastic meshes, or plastic rubbers. The microparticles collecting filler (5) increases gas-liquid contact area for the inflowing gas (h) passing through the basket (19) by catching the microparticle collection liquid (4) supplied to the casing (1). When the midair metal balls are used, it is preferred to form concaves and convexes or rough interconnected cell especially for the plastic balls. When the plastic balls are used, it is preferred to form rough interconnected cell. When the microparticles collecting filler (5) made of plastic are used, it is preferred to use the filler (5) which is treated surface modification with plasma. Such filler (5) can keep the wet condition by the microparticle collection liquid (4). Consequently, stick capture efficiency against the microparticles can be improved.

High-viscosity and low vapour pressure oil such as fluorine series oil, silicon series oil, or mineral oil and plant-derived low vapour pressure oil such as glycerin can be used as the microparticle collection liquid (4). Using aforementioned oil has little environmental impact, because supernatant liquid which SiO has settled out by water dilution can be treated as sewage.

Inside of the casing (1), the microparticle collection liquid (4) is accumulated to a level lower than the opening of the connecting pipe (7). A lower part of the basket (19) is always immersed in the microparticle collection liquid (4). The microparticle collection liquid (4) circulates from a recovery pump (32) to the liquid supply pipe (12) through a collection liquid reservoir (30) by a circulation pump (31) . A part of the microparticle collection liquid (4) is replaced by new liquid. The microparticles to be collected are SiO microparticles, smoke (mainly SiO microparticles) , or microparticles of reaction product. In general, the microparticles are powder dust accompanied by exhaust gas (H) from manufacturing equipment.

An axis of rotation (20) of the rotating cylinder (16) is connected to a motor (34) having a transmission provided adjacently by a coupling (35). The motor (34) is supported by motor supporting legs (36) arranged in a standing manner from a base (15).

The connecting pipe (7) having an opening at one end closely-facing the opening (6) at one end of the rotating cylinder (16) of the rotating drum (2) is fixed to the casing (1). And the other end of the connecting pipe (7) is connected to the vacuum pump (C). As shown in Fig.2, all circumferences of the opening of the connecting pipe (7) are welded to the bearing housing (11) . The inflowing gas (h) leaked through narrow gaps between the opening of the connecting pipe (7) and the opening (6) of the rotating cylinder (16) is prevented from leaking to a side of the basket (19) by a seal (18) provided as to contact and slide to the rotating cylinder (16). Similarly, the inflowing gas (h) is prevented from leaking by a seal (18) provided as to contact and slide to the rotating cylinder (16) in the bearing housing (11) near the motor (34).

By operating the single crystal lifting equipment (B) and the vacuum pump (C), the exhaust gas (H) including the microparticles is flown into the casing (1) through the exhaust pipe (3) as described above. In the filter (A), the rotating drum (2) is rotated by the motor (34) in a certain rotating speed. Each part of the microparticles collecting filler (5) is submerged in turn through the microparticle collection liquid (4) accumulated at under part of the casing (1). And each part of the microparticles collection filler (5) goes out of the microparticle collection liquid (4) in a state that the microparticle collection liquid (4) adheres on the surface of the filler (5).

The inflowing gas (h) flown into the casing (1) contacts the microparticle collection liquid (4) on the surface of the microparticles collecting filler (5) through gaps between each pillar member (25) and mesh of the cylindrical net (26). When the inflowing gas (h) contacts the microparticle collection liquid (4), the microparticles within the flown gas (h) adhere to the microparticle collection liquid (4) . After the collection, the inflowing gas (h) is supplied to the vacuum pump (C) through the slits of the rotating cylinder (16), the rotating cylinder (16), and the connecting pipe (7). When the rotating drum (2) is rotated, the microparticles collecting filler (5) is stirred within the rotating drum (2). A part of the microparticle collection liquid (4) including the adheringmicroparticles is returned to the accumulatedmicroparticle collection liquid (4). And other part of liquid (4) adhering to the filler (5) can collect other microparticles. When the microparticles collecting filler (5) is made of plastics and treated the surface modification, the wettability of the surface of the filler (5) against the microparticle collection liquid (4) can be kept. Consequently, the improved collection ability for the microparticles can be maintained.

Furthermore, the gas-liquid contact in this embodiment is different from normal gas-water contact by the following reasons. Consequently, collection efficiency is improved, because opportunity of gas-liquid contact becomes far higher, and adhesiveness of the microparticles becomes very high.
[1] The filler (5) is free to move within the rotating drum (2) by rotation of the rotating drum (2).
[2] Because the microparticle collection liquid (4) has high viscosity, a thin film is formed within the filler (5), and the sticky liquid (4) flows on the surface of the filler (5). Furthermore, because the microparticle collection liquid (4) has low vapour pressure, vapour does not flow backward the equipment (B) operated under reduced pressure. Consequently, the equipment (B) will not be contaminated. "Dust explosion" or the like by chain of ignitions also be avoided, because the collected microparticles is wrapped in the high viscosity microparticle collection liquid (4).

The number of the microparticles included in the gas (h) supplied to the vacuum pump (C) is largely reduced. Consequently, the number of troubles caused by the microparticles in the vacuum pump (C) also be largely reduced. Because the number of the collected microparticles is increased in use of the microparticle collection liquid (4), the viscosity also be increased. But a part of the microparticle collection liquid (4) always change to new liquid (4). Then stable collection is operated.

Fig.3 shows the second embodiment (A2) of the protective filter for vacuum pump (A) . In this embodiment, the rotating drum (2) is rotated with a roller (40) driven by a motor (34). A sparse plastics mat is used as the filler (5). The microparticle collection liquid (4) adheres on the surface of the plastics mat filler (5). Then the collection of microparticles becomes more efficient.

For example, in the single crystal silicon lifting equipment, when a single crystal is grown into a ingot and lifted in argon gas and reduced pressure atmosphere, SiO and SiO₂ are formed by reaction between melted silicon and quartz crucible in the equipment. The SiO and SiO₂ are supplied to the vacuum pump with the argon gas. As described in the related art, these SiO and SiO₂ adhere to inner wall of the vacuum pump and a surface of rotating rotor. And adhering SiO and SiO₂ cause a seizure of rotor and erosion and damage of pump components. The embodiment reduces such troubles. And discharge of gas including SiO and SiO₂ causes environmental pollution. Furthermore, SiO collected at latter part of the reduced pressure equipment causes dust explosion. But the removal of SiO in advance prevents the dust explosion and environmental pollution. In the device of the present invention, the microparticle collection liquid (4) which has collected the microparticles of SiO and SiO₂ up to Cp=about 5000 can be used. If the viscosity becomes higher than the limit, new liquid having Cp=500 or regeneration waste is changed to a part of the liquid (4). Then the operation can be continued. Coagulation method or centrifugation method can be applicable for regeneration.

Although the invention has been described in its preferred form with a certain degree of particularity, it is understood that the present disclosure of the preferred form has been changed in the details of construction and the combination and arrangement of parts may be resorted to without departing from the spirit and scope of the invention as hereinafter claimed.

The disclosure of Japanese Patent Application No.2011-60999 filed March 18th, 2011 including specification, drawings and claims is incorporated herein by reference in its entirety.

## Claims

1. a protective filter (A) for vacuum pump comprising:
a casing (1) being supplied exhaust gas (H) including microparticles through an exhaust pipe (3) and accommodating microparticle collection liquid (4) inside;
a rotating drum (2) having a rotating cylinder (16) and a basket (19) provided around the rotating cylinder (16), being filled a filler (5) for collecting the microparticles, rotating inside the casing (1) immersing a part of the filler (5) to the microparticle collection liquid (4), the exhaust gas (H) supplied into the casing (1) flows into the rotating cylinder (16) contacting the microparticle collection liquid (4) at a surface of the filler (5), the exhaust gas (H) is discharged through an opening (6) provided at one end of the rotating cylinder (16);
a roller (40) rotating the basket (19); and
a connecting pipe (7) having an opening facing the opening (6) of the rotating cylinder (16), fixed to the casing (1), and connected to the vacuum pump (C).

2. the protective filter (A) for vacuum pump according to claim 1, wherein the microparticle collection liquid (4) is high viscous and low vapour pressure liquid.

3. the protective filter (A) for vacuum pump according to claim 2, wherein the high viscous and low vapour pressure liquid is glycerin.

4. the protective filter (A) for vacuum pump according to claim 2, wherein the high viscous and low vapour pressure liquid is high viscous and low vapour pressure oil.
